# EUROPEAN PATENT APPLICATION

(11) **EP 2 308 317 A2**
(43) Date of publication of application: **13.04.2011**
(21) Application number: 10177552.6
(22) Date of filing: 20.09.2010
(51) Int. Cl.: A23C 9/152, A23L 1/236, A23L 2/02, A23L 2/60, A23C 11/10, A23L 1/20

(54) **Reduced calorie soy beverage**

(30) Priority: 21.09.2009 US 244263 P; 17.08.2010 US 858191
(71) Applicant: WhiteWave Services, Inc., Dallas TX 75204 (US)
(72) Inventor: Chiaverini, Michael Anthony, Boulder, CO 80303 (US)
(74) Representative: De Clercq, Ann G. Y.

(57) **Abstract**

In one embodiment, a method comprises selecting ingredients including a natural, high-intensity sweetener, a dairy milk or a non-dairy milk base, and one or more other ingredients selected from the group consisting of stabilizers, vitamins, minerals, flavors, functional ingredients, salts, antioxidants, sugar, and water. The selected ingredients are added to a mixing chamber and mixed to yield a formulation with the ingredients dispersed substantially evenly throughout. Some claims are directed to mixing a soy extract with a calcium source comprising calcium carbonate or tricalcium phosphate. Another embodiment is directed to a beverage including a natural high intensity sweetener, a sugar, a soy extract, a calcium source and an antioxidant.

## Description

### FIELD OF THE INVENTION

This invention relates in general to low-calorie sweetener food products and, more particularly, to a reduced calorie soy beverage.

### BACKGROUND OF THE INVENTION

Soybean based food products, such as soy milk, may include added sugar to yield a flavor profile that improves consumer acceptance. Sugar may be added in the form of liquid sugar, crystallized sugar, honey, agave, or other sugar. Adding sugar, however, may add calories which may be considered unfavorable to health or diet conscious consumers. Artificial sweeteners, such as sucralose, aspartame, and saccharine, may provide a low-calorie alternative to sugar. Artificial sweeteners, however, may have an undesirable flavor or aftertaste and may include chemicals that do not appeal to health conscious consumers.

### SUMMARY OF THE INVENTION

In one embodiment, a method comprises selecting ingredients including a natural, high-intensity sweetener, a dairy milk or a non-dairy milk base, and one or more other ingredients selected from the group consisting of stabilizers, vitamins, minerals, flavors, functional ingredients, salts, antioxidants, sugar, and water. The selected ingredients are added to a mixing chamber and mixed to yield a formulation with the ingredients dispersed substantially evenly throughout.

Certain embodiments of the present disclosure may provide one or more technical advantages. As an example, in some embodiments, the amount of calories required to optimally sweeten a soybean based food product may be reduced. As another example, in some embodiments, the product may be sweetened using naturally-derived, plant-based sweeteners. As yet another example, in some embodiments, a selected pH may be achieved during processing to yield a product with desired sensory properties.

Other technical advantages of the present disclosure will be readily apparent to one skilled in the art from the following figures, descriptions, and claims. Moreover, while specific advantages have been enumerated above, various embodiments may include all, some, or none of the enumerated advantages.

### BRIEF DESCRIPTION OF FIGURES

For a more complete understanding of the present disclosure and its advantages, reference is now made to the following description, taken in conjunction with the accompanying drawings, in which:
FIGURE 1 illustrates an example of a system for producing a reduced calorie soy product; and
FIGURE 2 illustrates an example of a method for producing a reduced calorie soy product.

### DETAILED DESCRIPTION OF THE INVENTION

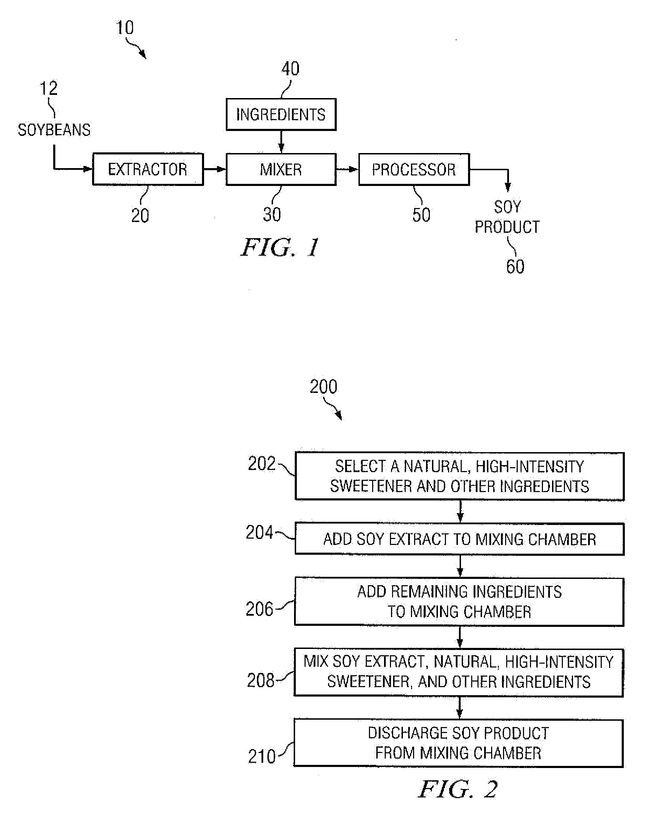

Embodiments of the present invention and its advantages are best understood by referring to FIGURES 1 to 3 of the drawings, like numerals being used for like and corresponding parts of the various drawings.

Soybean based food products, such as soy milk, may include added sugar to yield a flavor profile that improves consumer acceptance. Sugar may be added in the form of liquid sugar, crystallized sugar, honey, agave, cane juice, or other sugar. Adding sugar, however, may add calories which may be considered unfavorable to health or diet conscious consumers. Artificial sweeteners, such as sucralose, aspartame, and saccharine, may provide a low-calorie alternative to sugar. Artificial sweeteners, however, may have an undesirable flavor or aftertaste and may include chemicals that do not appeal to health conscious consumers. Accordingly, in some embodiments, naturally-derived, plant-based, high-intensity sweeteners may be used to sweeten soy based food products while adding fewer calories than sugar sweeteners and without adding artificial ingredients.

FIGURE 1 illustrates an example of a system 10 for processing soybeans 12 to yield a reduced calorie soy product 60. In some embodiments, system 10 may include an extractor 20, a mixer 30, ingredients 40, and a processor 50.

In some embodiments, extractor 20 may generate an aqueous soy extract from soybeans. For example, extractor 20 may receive dried soybeans 12 and may remove the hulls. The dehulled soybeans 12 may be ground with water, and the soluble components of the soybeans 12 may be extracted into the water to form a soy extract (e.g., full fat soy extract or low fat soy extract). The insoluble components may be separated out of the soy extract, for example, by mechanical means. The soy extract may be added to mixer 30.

In some embodiments, mixer 30 may combine the soy extract with other ingredients 40 to produce a product 60. Mixer 30 may comprise any appropriate container suitable to receive, mix, and/or discharge one or more ingredients 40. In particular embodiments, mixer 30 may comprise a stainless steel chamber of any suitable size. For example, mixer 30 may be sized to mix the soy extract and ingredients 40 in large batches that may later be divided into smaller sizes suitable for sales to consumers, or mixer 30 may be sized to mix smaller, individual-sized portions.

Mixer 30 may receive the soy extract and the ingredients 40 through one or more different inlets. For example, the soy extract may be added to the mixing chamber through one or more nozzle and hose inlets, and other ingredients 40, such as sweeteners, flavors, and/or stabilizers, may be added through one or more openings in mixer 30. Mixer 30 may include one or more means for blending, mixing, combining, stirring, and/or agitating ingredients 40. For example, mixer 30 may include mechanical agitators, pressure jets, or other suitable mixing devices, whether located within mixer 30 or external to mixer 30. Alternatively, mixer 30 may allow for stirring or mixing by hand. In some embodiments, mixer 30 may be chilled (depending on the particular ingredients 40 used) to prevent spoliation of one or more ingredients 40 during mixing and/or processing. Accordingly, mixer 30 may include a jacketed or insulated tank to maintain appropriate temperatures. Mixer 30 may also include one or more discharge outlets connected to other components of system 10. For example, mixer 30 may include one or more discharge outlets connected to hoses or tubes, which may carry an aqueous solution mixed by mixer 30 to processor 50, which may comprise one or more processing components.

Ingredients 40 represent constituent elements of product 60 that are deposited, mixed or combined, and discharged from mixer 30. Examples of ingredients 40 may include, but are not limited to, sweeteners, stabilizers, vitamins, minerals, flavors, extracts, salts, coloring agents, functional ingredients, and other ingredients including dairy milk or dairy milk alternatives. Sweeteners may be added to enhance the taste of the flavorings provided and/or provide overall sweetness to product 60. In particular embodiments, sweeteners may include one or more natural, high-intensity sweeteners, such as stevia, including any compound or extract derived from the stevia plant (e.g., rebiana-A, rebaudioside-A, and reb-A). In some embodiments the natural, high-intensity sweetener may be co-processed with other sweeteners. As an example, stevia may be co-processed with sugar by blending, co-crystallization, plating (e.g., applying a solution of stevia and water to sugar crystals and allowing the stevia to dry on the surface of the sugar crystals), or other co-processing. Stabilizers may be added to mixer 30 to prevent separation or precipitation of product 60 once deposited in a package or container. Vitamins and minerals may be added to enhance the nutritional profile of product 60. Flavors may be added to enhance and/or change the taste of the resulting mixture. For example, flavors may include vanilla extract, almond extract, citrus extract, cocoa powder, strawberry or other fruit flavoring, or any other appropriate extracts, chemical compounds, or natural additives suitable to provide the described function. Salts may be added to improve taste and/or to act as buffering agents to enhance protein stability. In operation, an operator of system 10 selects appropriate ingredients for the desired finished product. Once appropriate ingredients 40 are selected, an operator introduces selected ingredients 40 into mixer 30. Ingredients may be added serially (i.e., one at time), collectively (i.e., all ingredients are added substantially at once), or a combination (i.e., certain subsets of ingredients are pre-combined, and the combination is added serially with other ingredients or ingredient combinations). After an appropriate mixing time, the product 60 may be discharged into processor 50 manually or through one or more nozzles, hoses, spigots, or other appropriate discharging outlet.

Processor 50 may comprise one or more components for further processing the soy mixture. As an example, processor 50 may include means for pasteurizing the soy mixture to reduce the number of undesirable microorganisms and prolong shelf life. As another example, processor 50 may include a homogenizer or other means for reducing particle size so that particle distribution may be maintained and mouthfeel may be improved. In some embodiments, the soy mixture may be processed through a heat exchanger to pasteurize the mixture and then processed through another heat exchanger to cool the mixture. The cooled mixture may be processed through a homogenizer.

In particular embodiments, product 60 comprises a flavored or non-flavored soy milk beverage. For example, system 10 may be operable to produce a reduced-calorie chocolate soy milk beverage. In general, however, product 60 may represent any reduced-calorie, sweetened soy-based food product. Additionally, although the example has described configuring system 10 to produce a soy product, system 10 may be alternatively configured to produce other reduced-calorie, sweetened non-dairy (e.g., nut or cereal-based milk) products, dairy products, or combinations of one or more non-dairy and/or dairy products.

In some embodiments, the product 60 may be directed from processor 50 to packaging, bottling, or filling components suitable to ready product 60 for commercial sale or use. For example, packaging components may deposit an amount of the mixture into one or more bottles, jars, cans, cartons, and/or any other appropriate container.

System 10 may provide one or more advantages. System 10 may provide a reduce-calorie, all-natural sweetened food product. In particular embodiments, system 10 may provide a reduced calorie product 60 that has a flavor profile similar to a primarily sucrose-sweetened product. In addition, a natural sweetener may enhance the flavor profile of product 60 as compared to artificial sweeteners which may have an unpleasant aftertaste. Particular embodiments may provide some, none, or all of these operational benefits, and may provide additional operational benefits.

Modifications, additions, or omissions may be made to system 10 without departing from the scope of the invention. The components of system 10 may be integrated or separated. Moreover, the operations of system 10 may be performed by more, fewer, or other components.

FIGURE 2 is a flow diagram illustrating a method 200 for making a reduced calorie soy beverage. The method begins at step 202 where appropriate ingredients are selected. In some embodiments, the ingredients may include a non-dairy milk base, such as soy extract, a natural, high-intensity sweetener, and one or more sweeteners, stabilizers, vitamins, minerals, flavors, functional ingredients, salts, other dairy or non-dairy milk, antioxidants, and water.

The quantity of soy extract may be selected to provide a desired nutritional profile based on the nutrient composition of the extract, for example 10 to 80% of the formula.

Sweeteners may be natural, artificial, and/or high-intensity and may function to make the products taste more appealing. Depending on their sweetening power, sweeteners may comprise approximately 3 ppm to 20% of the formula. Natural, high-intensity sweeteners, such as stevia or stevia derivatives, may be used as a low-calorie alternative to or in combination with other sweeteners, such as other natural, high-intensity sweeteners, sugar (e.g., liquid sugar, crystallized sugar, honey, agave, cane juice, etc.), and/or artificial sweeteners (e.g., sucralose, aspartame, saccharine, etc.). In some embodiments, an amount of sugar to be combined with the natural, high-intensity sweetener may be selected to yield a selected sweetness level and selected number of calories, while minimizing metallic or bitter flavors that may be associated with the natural, high-intensity sweetener alone.

Stabilizers enhance physical properties of beverages by imparting viscosity or mouthfeel properties that may increase consumer appeal. Stabilizers may be natural or artificial and may contribute to a uniform appearance of products by stabilizing and or suspending insoluble materials and preventing separation or settling of ingredients. Examples of stabilizers may include, but are not limited to, emulsifiers, starches, gums, and various hydrocolloids such as guar, acacia, locust bean, xanthan, gellan, carrageenan, cellulose, and pectin. Approximate ranges of stabilizers may vary from 0.02 to 5% depending on desired product properties and functionality of stabilizers.

Vitamins and minerals may be added to fortify products. As an example, in some embodiments, the product may be fortified with calcium using calcium carbonate (CaCO₃) and/or tricalcium phosphate (Ca₃(PO₄)₂). The calcium source may be selected to maintain a pH level within a suitable range during processing, such as pasteurization processing. Pasteurization may refer to heating the product to a temperature (e.g., 280 to 305°F) and holding it at the temperature for a period of time (e.g., 1 to 10 seconds) to reduce the number of viable pathogenic micro-organisms in the product. The product may be pasteurized and cooled using indirect or direct heating. An example of indirect heating may include passing the product through a heated pipe. An example of direct heating may include injecting steam into the product. A vacuum flash may be applied to the steam-injected product once the pasteurization process has been completed to remove the water vapor and cool the product. Fortifying the product with calcium carbonate may cause carbonic acid to form. During steam injection, the carbonic acid may progress to carbon dioxide gas. Applying the vacuum flash may pull the carbon dioxide off of the product. The resulting cooled product may include less carbonic acid than the pre-pasteurization product, and the reduction in acid may cause the pH of the product to increase. If the pH is increased too much, the product may develop off flavors and/or the product shelf-life may be shortened. Alternatively, fortifying the product with tricalcium phosphate may not result in carbon dioxide liberation upon the application of steam injection and vacuum flash processing. Accordingly, the pH of a product fortified with tricalcium phosphate may be substantially the same before and after direct pasteurization.

In some embodiments, a combination of calcium carbonate and tricalcium phosphate may be used to fortify the product with calcium. The amount of each ingredient may be determined by selecting a desired calcium level for the product and a desired pH for the product. The desired calcium level may be selected as a percentage of the daily value (%DV), such as 10 to 50%. In some embodiments, the desired pH for the product may be less than the pKa of cysteine's sulfhydryl containing side chain (CH₂SH). As an example, the desired pH may be in the range of 6.5 to 8.14, for example, 6.9 to 7.5. An amount of calcium carbonate suitable to yield the selected pH may be added to the product, and an amount of tricalcium phosphate may be added such that, when combined with the calcium carbonate, the selected %DV of calcium is met. Other calcium sources or combinations of calcium sources may be used to yield the above mentioned pH ranges in order to exhibit the above mentioned benefits. Examples of other calcium sources include calcium monophosphate, calcium lactobionate, and calcium lactate.

Flavors and flavoring ingredients including extracts of plant materials, cocoa powder, milk based ingredients, compounded flavors, impart desired taste attributes to products. They are used at various levels depending on the strength and the desired end product attributes. Approximate ranges of flavoring ingredients may vary from 0.002 to 5% depending on desired product properties.

Functional ingredients like fiber, plant sterols, etc. may be added to soymilk formulations to enhance functionality of products.

Salts of various types may also be used to improve taste, and to act as buffering agents to enhance protein stability. Such salts include sodium citrate, sodium chloride, potassium citrate, potassium phosphate, and dipotassium phosphate.

Antioxidants may prevent and/or reduce oxidation and may preserve the flavor and appearance of the product during refrigerated and/or unrefrigerated storage. Examples of antioxidants may include BHA, BHT, propyl gallate, tocopherols, and salts of ascorbic acid, such as sodium ascorbate. In some embodiments, sodium ascorbate may be selected due to its ability to provide vitamin C to the product.

In some embodiments, soy milk may be combined with other milks or milk substitutes. For example, soymilk may be combined with dairy milk, or nut milk (e.g., almond milk), or milks derived from cereals (e.g., rice milk).

Water comprises the balance of the formula.

The following illustrate examples of a soymilk formula using a natural, high-intensity sweetener in combination with salts and natural flavors to impart desirable taste profile and low calorie content. Dry ingredients may be weighed according to the formula and blended together.

### Example 1

| **Ingredient** | **Approximate Range** | **Example Range** |
|---|---|---|
| Soybean extract comprising approximately 8 - 28% soy solids | 10 - 70% | |
| Evaporated cane juice | 0 - 12 % | 1 - 6% |
| Calcium carbonate | 0 - 1% | 0.1 - 0.5% |
| Rebaudioside A (high intensity sweetener) | 0 - 0.05% | 0.001 - 0.006% |
| Carrageenan | 0 - 0.1% | 0.04 - 0.08% |
| Sodium chloride | 0 - 0.2% | 0.05 - 0.1% |
| Tripotassium citrate | 0 - 0.50% | 0.02 - 0.2% |
| Natural flavor | 0 - 0.50% | 0.01 - 0.1% |
| Water | q.s. 100% | Balance |

### Example 2

| **Ingredient** | **Approximate Range** | **Example Range** |
|---|---|---|
| Soybean extract comprising approximately 8 - 28% soy solids | 10 - 70% | |
| Evaporated cane juice | 0 - 12% | 1 - 6% |
| Cocoa powder | 0 - 2% | 0.5 - 1.5%; |
| Calcium carbonate | 0 - 1% | 0.1 - 0.5% |
| Rebaudioside A (high intensity sweetener) | 0 - 0.05% | 0.001 - 0.006% |
| Carrageenan | 0 - 0.1% | 0.04 - 0.08% |
| Guar gum | 0 - 0.50% | 0.01 - 0.25% |
| Xanthan gum | 0 - 0.1% | 0.01 - 0.05% |
| Sodium chloride | 0 - 0.2% | 0.05 - 0.1% |
| Tripotassium citrate | 0 - 0.50% | 0.02 - 0.2% |
| Natural flavor | 0 - 0.50% | 0.01 - 0.2% |
| Water | q.s. 100% | Balance |

In some embodiments, the soybean extract may comprise a low fat soybean extract to reduce fat levels and calories relative to regular soymilk and other types of milk. Low fat soybean extract may be produced from soybeans that have been partially defatted using an expeller process, an extrusion process, or other suitable process. In some embodiments, the low fat soybean extract may be produced from a regular soybean extract (i.e., an extract produced from whole soybeans) by removing fat from the extract using conventional or non-conventional means, such as centrifugation, membrane separation, and so on.

### Example 3

| **Ingredient** | **Approximate Range** | **Example Range** |
|---|---|---|
| Low fat soybean extract with approximately 5 - 20% soy solids | 30 - 70% | |
| Evaporated cane juice | 0 - 10% | 1 - 2% |
| Calcium carbonate | 0 - 1% | 0.01 - 0.05 % |
| Tri-calcium phosphate | 0 - 1% | 0.1 - 0.5% |
| Rebaudioside A (high intensity sweetener) | 0 - 0.05% | 0.001 - 0.006% |
| Sodium ascorbate | 0 - 1% | 0.01 - 0.05% |
| Carrageenan | 0 - 0.1% | 0.04 - 0.08% |
| Sodium chloride | 0 - 0.2% | 0.05 - 0.1% |
| Tripotassium citrate | 0 - 0.50% | 0.02 - 0.2% |
| Natural flavor | 0 - 0.50% | 0.01 - 0.2% |
| Water | q.s. 100% | Balance |

### Example 4

| **Ingredient** | **Approximate Range** | **Example Range** |
|---|---|---|
| Low fat soybean extract with approximately 5 - 20% soy solids | 30 - 70% | |
| Evaporated cane juice | 0 - 10 % | 0.1 - 2% |
| Calcium carbonate | 0 - 1% | 0.01 - 0.05 % |
| Tri-calcium phosphate | 0 - 1% | 0.1 - 0.5% |
| Rebaudioside A (high intensity sweetener) | 0 - 0.05% | 0.001 - 0.006% |
| Sodium ascorbate | 0 - 1% | 0.01 - 0.05% |
| Carrageenan | 0 - 0.1% | 0.04 - 0.08% |
| Sodium chloride | 0 - 0.2% | 0.05 - 0.1% |
| Tri-potassium citrate | 0 - 0.50% | 0.02 - 0.2% |
| Natural flavor | 0 - 0.50% | 0.01 - 0.2% |
| Water | q.s. 100% | Balance |

Certain ingredients may be increased or decreased to yield the desired properties. Additionally, levels of soy solids may be varied using any suitable soy source, such as soy extract, soy concentrate, and/or soy isolate.

At step 204, the soy extract, including water, may be introduced into the mixing chamber. The other ingredients may be added to the mixing chamber at step 206. As noted above, ingredients 40 may be added serially, collectively, or a combination.

At step 208, the soy extract and other ingredients may be mixed or combined in any appropriate manner to facilitate the dissolution of the dry ingredients in the mixture. For example, mechanical agitators, pressure jets, or other suitable mixing devices may be used to stir, mix, blend, agitate, or otherwise combine the ingredients. As another example, the ingredients may be stirred or mixed by hand. Mixing may continue until the ingredients are distributed substantially evenly throughout the product.

At step 210, the mixed soy product may be discharged from the mixing chamber. The product may then be directed to processing components, such as a pasteurizer and/or a homogenizer. The finished product may be packaged and stored in refrigerated storage. In some embodiments, the flavor and texture of the finished product may be substantially maintained after storing for several days, such as at least five days.

The method of producing a reduced-calorie soy beverage using a high-intensity sweetener may yield a formulation having fewer calories than other formulations sweetened primarily with sugar. For example, the chocolate soymilk formulation described may have approximately 90 calories per 8-oz serving compared to 120 calories when using sugar without natural, high-intensity sweeteners. In some embodiments, the amount of calories may be further reduced by using a low fat soybean extract. For example, an 8-oz serving of a low fat, reduced sugar beverage comprising a natural, high-intensity sweetener may have approximately 60 calories for plain soymilk or approximately 70 calories for flavored soymilk.

The steps illustrated in FIGURE 2 may be combined, modified, or deleted where appropriate, and additional steps may also be added to those shown. Additionally, the steps may be performed in any suitable order without departing from the scope of the present disclosure. Although the present disclosure has been described with several embodiments, numerous changes, variations, alterations, transformations, and modifications may be suggested to one skilled in the art, and it is intended that the present disclosure encompass such changes, variations, alterations, transformations, and modifications as fall within the scope of the appended claims.

## Claims

1. A method, comprising:
selecting ingredients, including:
a natural, high-intensity sweetener;
a dairy milk or a non-dairy milk base;
one or more other ingredients, the one or more other ingredients selected from the group consisting of stabilizers, vitamins, minerals, flavors, functional ingredients, salts, antioxidants, sugar, and water;
adding the ingredients to a mixing chamber;
mixing to yield a formulation having the ingredients dispersed substantially evenly throughout.

2. The method of Claim 1, wherein the natural, high-intensity sweetener comprises a stevia-derived sweetener.

3. The method of Claim 1, wherein the natural, high-intensity sweetener comprises Rebaudioside A.

4. The method of Claim 1, wherein the natural, high-intensity sweetener comprises approximately 3 ppm - 0.05% of the formulation.

5. The method of Claim 1, wherein the one or more other ingredients includes sugar present in an amount less than 12% of the formulation.

6. A method, comprising:
selecting ingredients, including:
a soy extract;
one or more calcium sources, a calcium source of the one or more calcium sources comprising calcium carbonate or tricalcium phosphate;
mixing the ingredients to yield a formulation; and
pasteurizing the formulation.

7. The method of Claim 6, further comprising:
selecting a desired pH for the formulation;
selecting a desired percent daily value of calcium for the formulation; and
determining an amount of each of the one or more calcium sources to yield the desired pH and the desired percent daily value of calcium

8. The method of Claim 6, further comprising:
selecting a desired pH for the formulation, the desired pH selected to be less than a pKa of cysteine's sulfhydrl containing side chain;
selecting a desired percent daily value of calcium for the formulation, the desired percent daily value in the range of 10 to 50%; and
determining an amount of calcium carbonate and an amount of tricalcium phosphate to yield the desired pH and the desired percent daily value of calcium.

9. The method of Claim 6, wherein the ingredients further include one or more antioxidants.

10. The method of Claim 6, wherein the ingredients further include sodium ascorbate or ascorbic acid.

11. The method of Claim 6, wherein the ingredients further include a natural, high-intensity sweetener.

12. The method of Claim 6, the soy extract further comprising a low fat soy extract.

13. The method of Claim 6, the ingredients further including:
a natural, high-intensity sweetener comprising approximately 3 ppm - 0.05% of the formulation; and
a sugar comprising less than 12% of the formulation.

14. A beverage, comprising:
a natural, high-intensity sweetener;
a sugar;
a soy extract;
a calcium source; and
an antioxidant.

15. The beverage of Claim 14, wherein:
the natural, high-intensity sweetener comprises rebaudioside A;
the calcium source comprises tricalcium phosphate; and
the antioxidant comprises sodium ascorbate.

16. The beverage of Claim 14, the calcium source comprising:
tricalcium phosphate present in an amount up to 1% of the beverage; and
calcium carbonate present in an amount up to 1% of the beverage;
the amount of tricalcium phosphate and the amount of calcium carbonate selected to yield a beverage pH less than the pKa of cystein's sulfhydrl containing side chain.

17. The beverage of Claim 14, further comprising one or more stabilizers.

18. The beverage of Claim 14, wherein the sugar comprises cane juice present in an amount less than 12% of the beverage.

19. The beverage of Claim 14, the calcium source comprising:
tricalcium phosphate and calcium carbonate, the amount of tricalcium phosphate and the amount of calcium carbonate selected to yield a beverage pH in the range of 6.5 to 8.14.
